# EUROPEAN PATENT APPLICATION

(11) **EP 2 818 392 A1**
(43) Date of publication of application: **31.12.2014**
(21) Application number: 12868940.3
(22) Date of filing: 27.07.2012
(51) Int. Cl.: B62M 1/00, B62D 51/02

(54) **TRANSPORT DEVICE**

(30) Priority: 22.02.2012 BR 102012003827
(71) Applicant: Neto, Jarbas Braga, Caxambu, 25615-060 Petrópolis - RJ (BR)
(72) Inventor: Neto, Jarbas Braga, Caxambu, 25615-060 Petrópolis - RJ (BR)
(74) Representative: Ricker, Mathias
(86) International application number: PCT/BR2012/000263
(87) International publication number: WO 2013/123567

(57) **Abstract**

The present invention relates to a transportation device consisting basically of a front wheel, associated with a handlebar and a rear wheel, in relation to which the user positions his legs laterally, thus, providing the most appropriate conditions for drivability of the vehicle in addition to providing a shortening of the vehicle wheelbase which contributes to make it more compact. Said rear wheel is equipped with a fairing, which serves to support the inside of the knee and thighs of the user, while acting as fender, and may have a configuration adapted for use as glove box as well as incorporating a carrying handle, and, when not in use, is foldable, to become a kind of suitcase with wheels.

## Description

### FIELD OF APPLICATION

The present invention relates to a device for transportation, currently called an environmentally friendly vehicle, intended for use by both adults and children, offering an alternative means of compact and portable transportation as well as a means of safe and enjoyable leisure.

### BACKGROUND OF PRIOR ART

Many light and compact vehicles are already known in the prior art, both folding and non-folding, using the functional principles adopted in skateboards/scooters, bicycles and kickbikes, and which are currently present in domestic and international markets under the brand names "Yike Bike," "Magic Wheel," "Solo Wheel," Bergmoench Backpack Scooter, and others.

The Magic Wheel, despite having good portability, does not have easy handling since it has no handlebars and requires great skill of the driver to change direction by play of the body and, in addition, requires the user to use the feet for braking, which substantially reduces stability and, consequently, safety.

Scooters/skateboards, although being lighter and portable, are not suited for uneven surfaces due to having very small wheels, and present good performance only on smooth surfaces such as asphalt and concrete.

There are scooters/skateboards which are already developed for use in all types of terrain (all terrain use), because they are large and very long, but this compromises portability.

Despite the characteristics of practicality achieved with the use of these products, there is an increasing need to propose a more suitable means for product portability, and, especially, a simpler means for compaction, for purposes of storage, without any loss to their characteristics of usability.

In order to overcome all the shortcomings arising from the current level of technology, this transportation device was designed and developed for use on various kinds of terrain, e.g., cobblestone streets, unpaved streets, trails, and other surfaces, without compromising portability.

### SUMMARY OF THE INVENTION

The transportation device proposed by the present invention, or environmentally friendly vehicle, may be motorized or employed by other means of displacement, for example, by physical effort, the rider/driver may push by foot, like an ordinary skateboard or skate of the "foot-push/kick-push type," basically becoming a combination bicycle or kickbike (wheels, tires and fork), skate (board / deck) and skateboard (handlebars and kick-scooter or push-scooter concept), still being foldable, and as such, can be taken anywhere and easily stored in a small space. It is a device that can be used professionally, by security guards, police or office boys. The device of the present invention can also be used for the entertainment of children and adults.

### BRIEF DESCRIPTION OF THE DRAWINGS

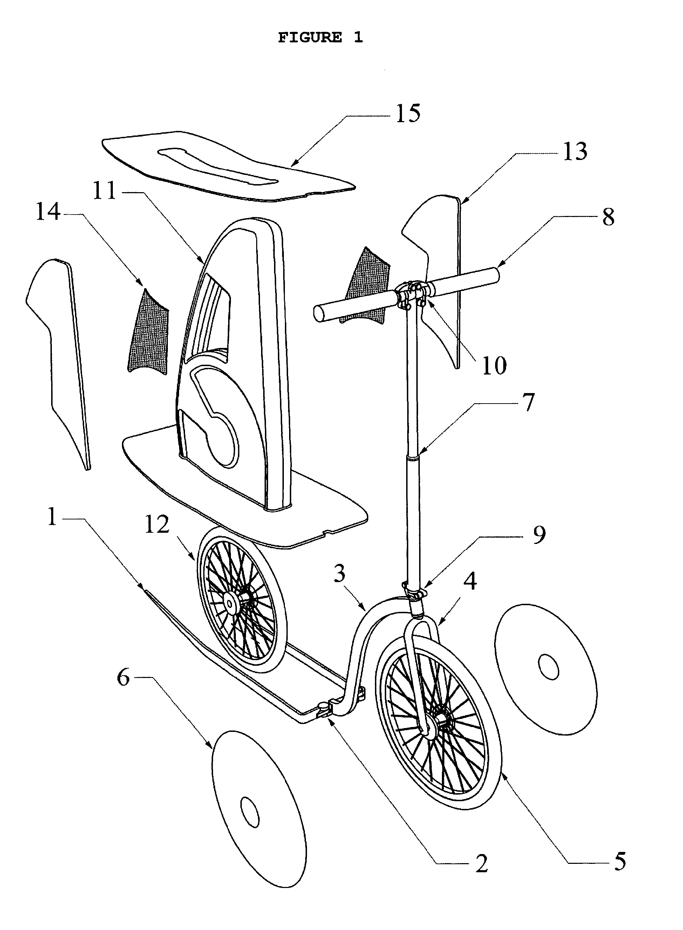

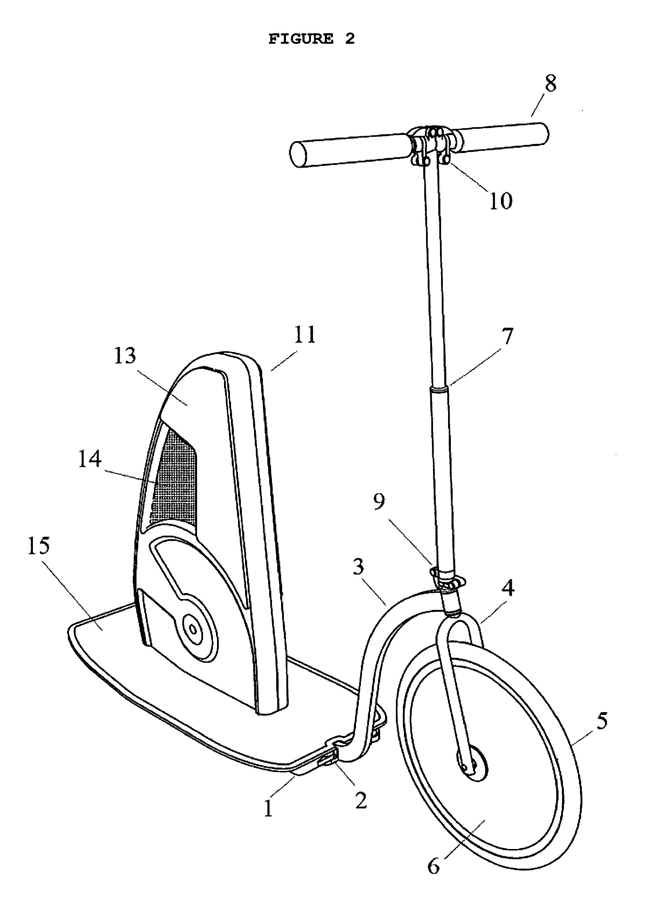

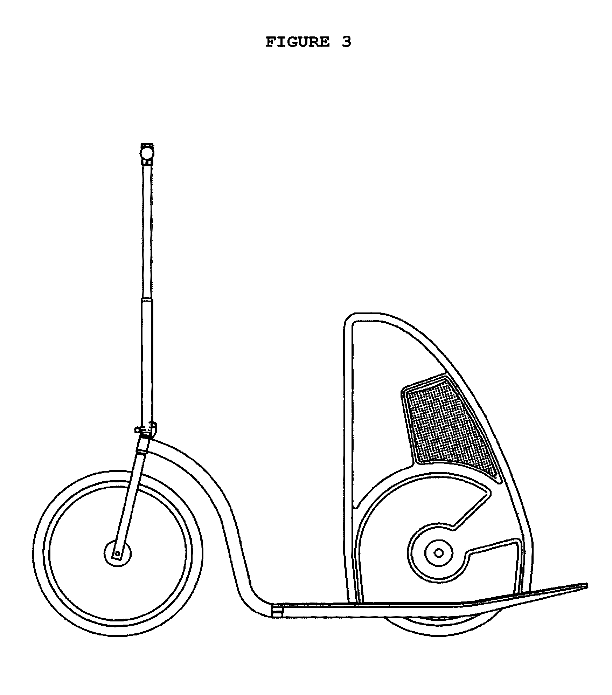

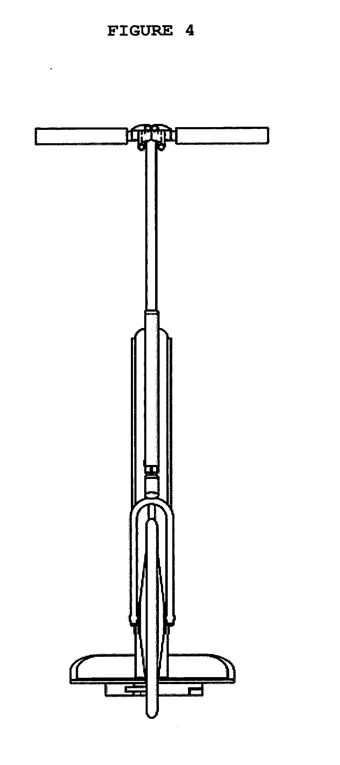

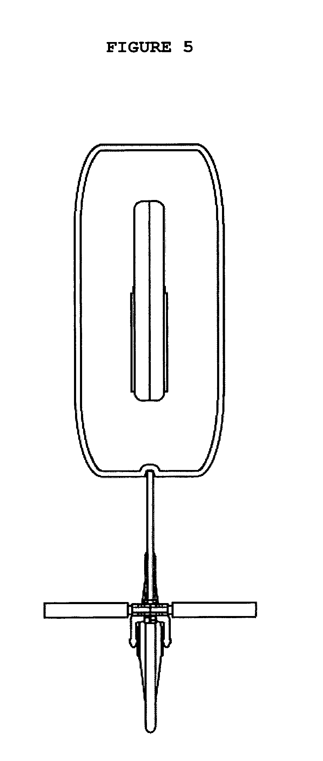

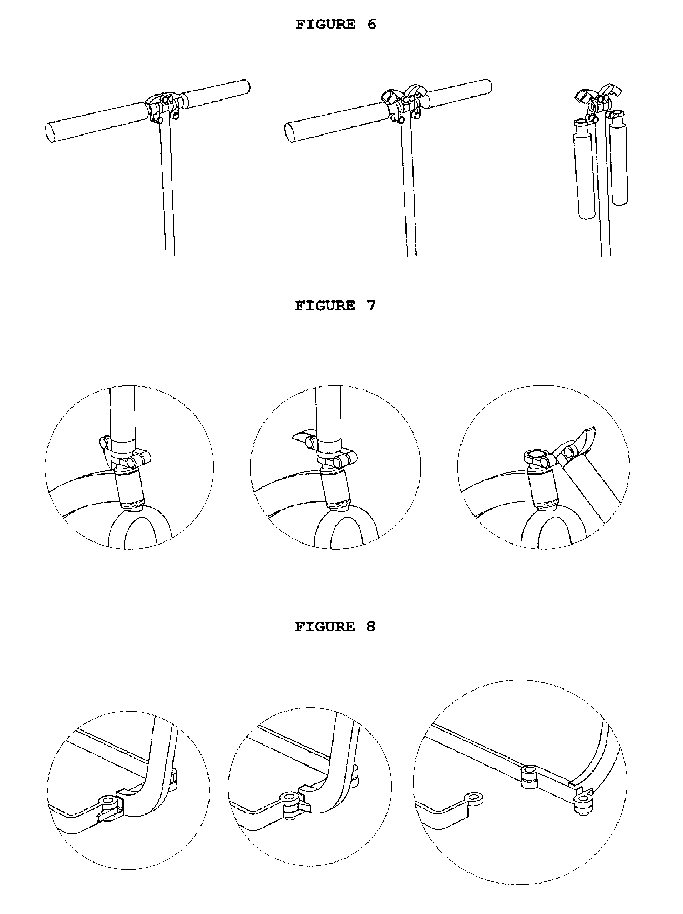

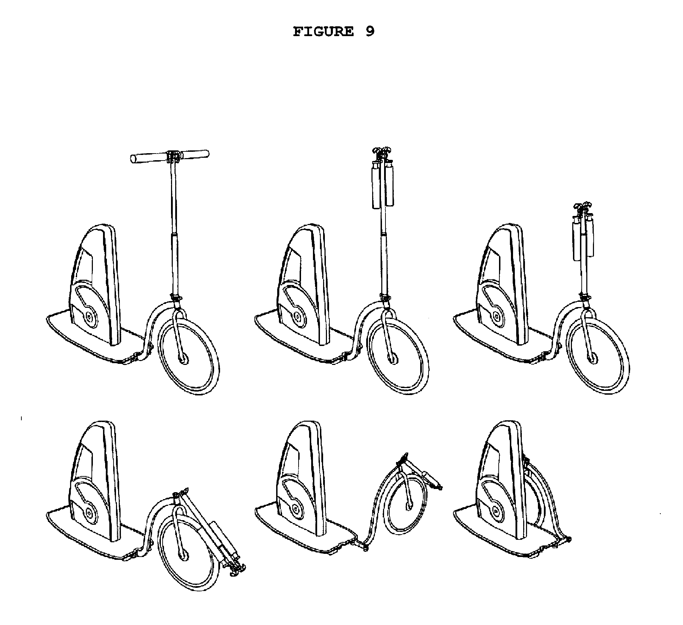

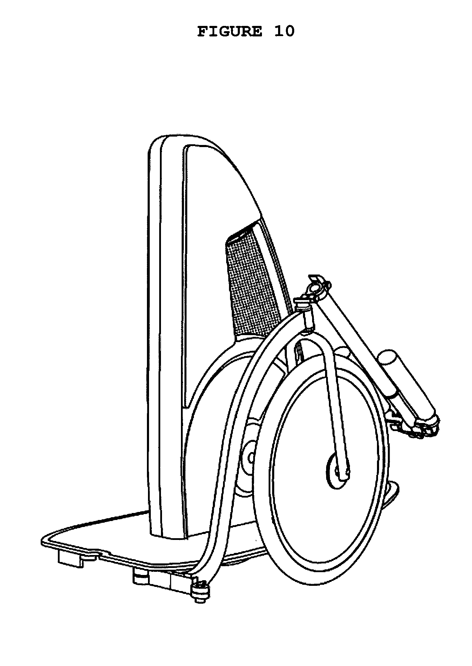

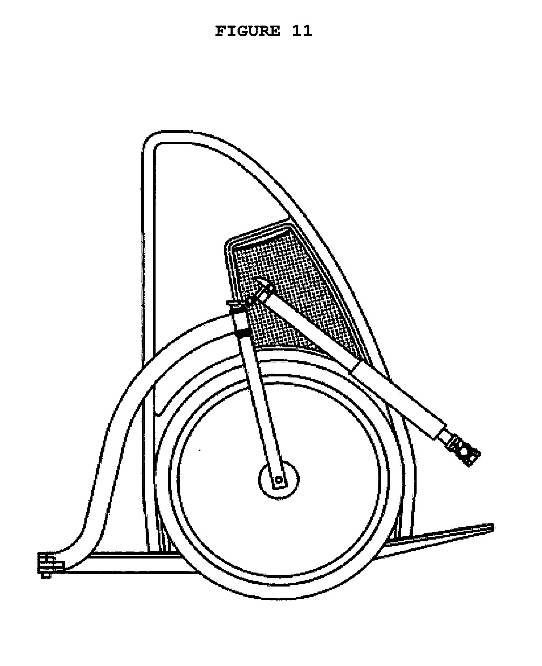

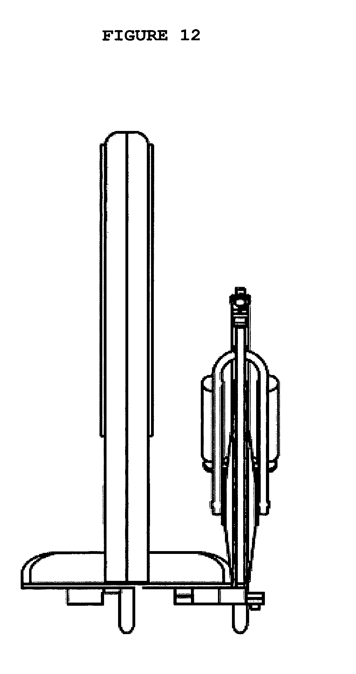

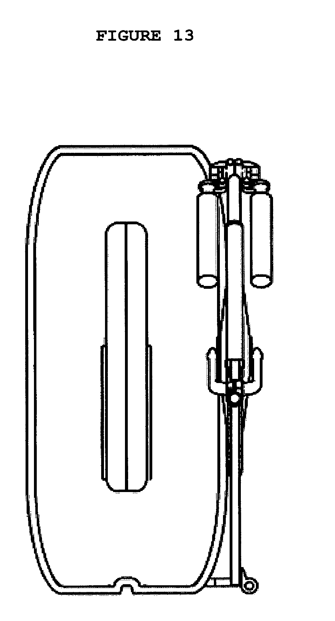

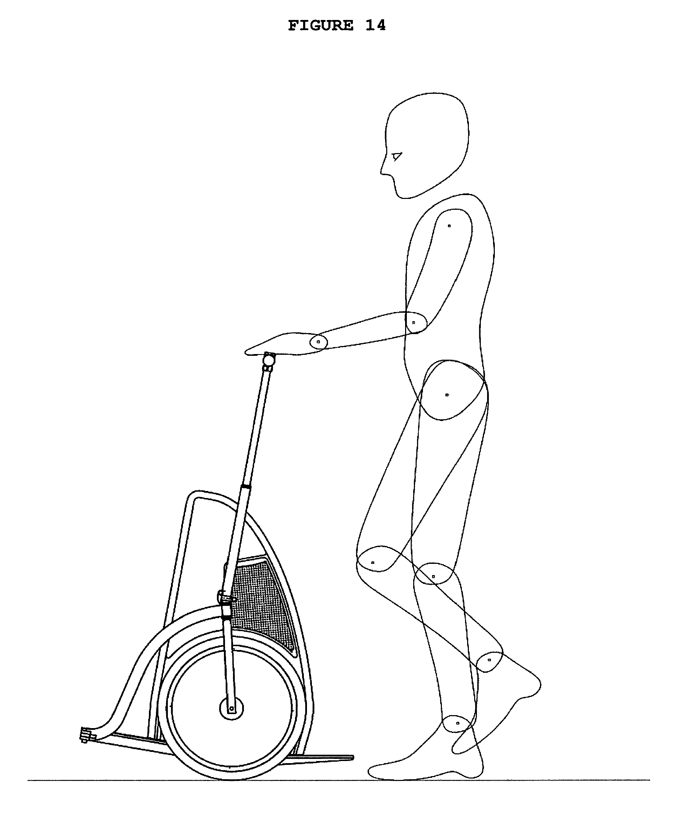

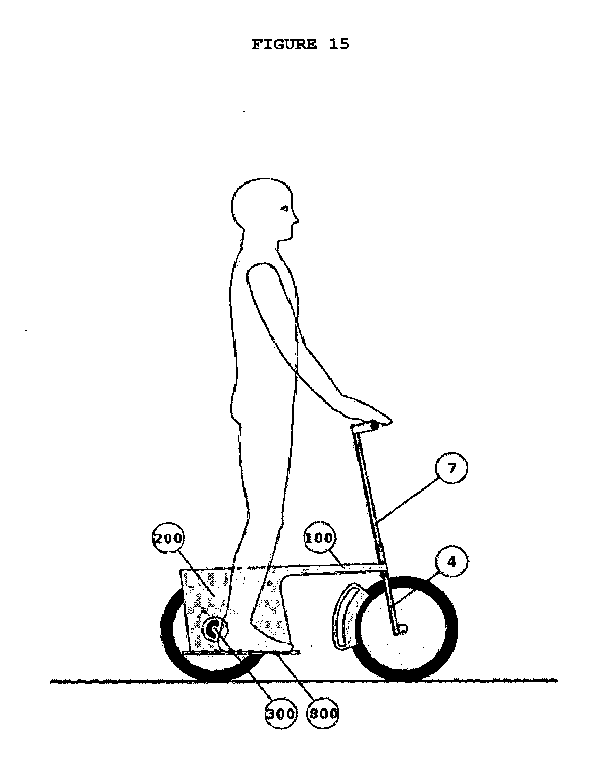

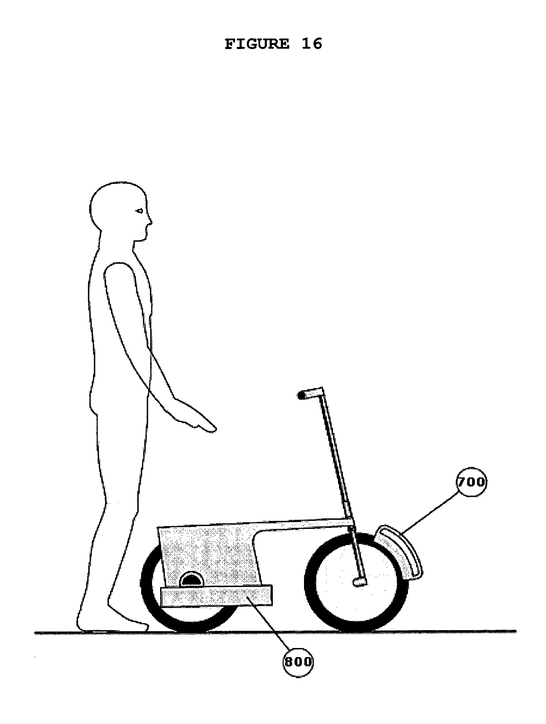

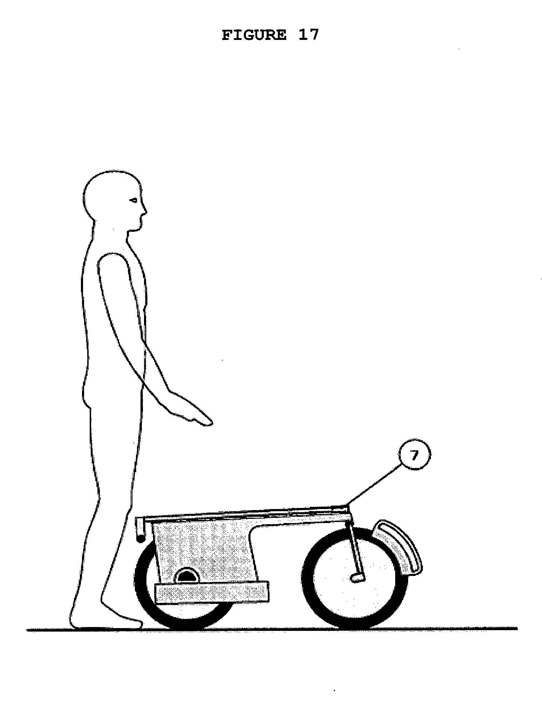

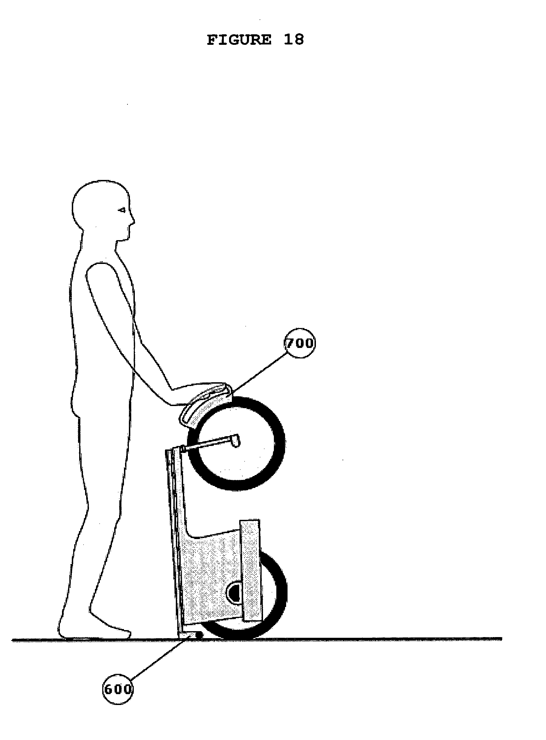

For a better understanding of the transportation device of the present invention, we refer to the accompanying drawings, in which Figures 1-14 show views of a first preferred embodiment of the present invention, and Figures 15-18 show views of a second embodiment of the present invention. More specifically, described as follows:
Figure 1 - Exploded view of the transportation device in the in-use position;
Figure 2 - Perspective view of the transportation device in the in-use position;
Figure 3 - Side view of the transportation device in the in-use position;
Figure 4 - Front view of the transportation device in the in-use position;
Figure 5 - Top view of the transportation device in the in-use position;
Figure 6 - Detailed view of the removal of the handlebar of the transportation device;
Figure 7 - Detailed view of the disassembly of the handlebar rod of the transportation device;
Figure 8 - Detailed view of the displacement of the front of the base frame of the transportation device;
Figure 9 - Perspective views of the transition between the positions of use and guard of the transportation device proposed herein;
Figure 10 - Perspective view of the transportation device in the guard position;
Figure 11 - Side view of the transportation device in the guard position;
Figure 12 - Front view of the transportation device in the guard position;
Figure 13 - Top view of the transportation device in the guard position;
Figure 14 - Schematic view of the displacement of the transportation device in the not-in-use position;
Figure 15 - Shows a schematic side view of a second embodiment of the transportation device of the present invention in use;
Figure 16 - Shows a schematic side view of a second embodiment of the transportation device of the present invention;
Figure 17 - Shows a first schematic side view of a second embodiment of the transportation device of the present invention in the guard position;
Figure 18 - Shows a second schematic side view of a second embodiment of the transportation device of the present invention.

### DETAILED DESCRIPTION OF THE INVENTION

To achieve the desired technical and functional aspects, the transportation device proposed herein has its main distinguishing feature centered on its usability and versatility, which appears superior to kickbikes, skateboards, and scooters which exist today in the international market, in view of the fact of being merged and aggregated in a single product, with the following qualities:
- Better / more stability and balance, due to the support provided by the fairing (located around the rear wheel) between the legs.
- Better / more stability and balance, provided, in one of the embodiments of the invention, by the footrest below the rear wheel axle, i.e., a lower center of gravity, providing more balance, and consequently a much safer and pleasurable means of transportation and leisure;
- Better / greater drivability, due to the use of the lateral support fairing between the legs which also helps to provide more balance. There are footrests, included behind and ahead of the rear wheel (board/skateboard deck type), facilitating the distribution of the "driver's" weight to allow straddling of curbs, street paving or other small obstacles which need to be overcome.
- Better / more portable compared to models known in the international market, which possess components and wheelbases of smaller size;
- Better / greater aesthetic appeal, striking design, attractive, current, paying particular attention to ergonomic adaptation for different heights of users/'driver's' and taking advantage of the rational use of space designed for the safekeeping of personal objects and/or objects for vehicle maintenance.

Another important aspect of the present invention is that the fairing also functions as a fender, which protects the user's clothing from dirt and possible accidental contact of the feet and legs with the wheel, which implies greater safety, especially when moving.

The present transportation device basically comprises a base frame, a fairing, at least one rod, which may or may not be flexible, at least one movable clamping device, a fork, one handlebar fitted with levers and wheels.

More specifically, a first embodiment of the present invention refers to the transportation device proposed herein, essentially comprising:
- a base structure (1) provided with a first rod at its front end (H);
- at least one movable clamping device (2);
- a second rod (3);
- a fork (4);
- a first wheel (5);
- a telescoping third rod (7);
- a handlebar (8) provided with levers;
- couplers (9) (10);
- a vertically extending fairing (11); and
- a second wheel (12).

The said base structure (1) is preferably metal, formed by a frame, which is substantially in the form of a "U," elliptical oval, rectangular, square, among others. Preferably, said base structure (1) has a "U" form," and its front end is provided with a first rod (H), a split front rod, whose segments are joined together by a movable clamping device (2), such as a latch bolt or quick release lever.

Those skilled in the art will recognize that the metallic material used in making the base structure (1) is not limited, and may thus be employed with other types of materials with the same properties as the metal, without changing the characteristics of the invention.

In one of the first rod segments (H) in the front, there is yet a second rod (3) fixed to said front rod by means of the usual technique, whose opposite end sympathizes inferiorly with a fork (4) in which it is coupled to a first wheel, called a front wheel (5) which is provided with lateral wheel covers, (6) and, superiorly, to a third rod (7) which acts as the support for the handlebars (8).

That third rod (7) is telescopic and able to articulate through its lower portion, by releasing the hooks (9), which are preferably of the clamp type with respect to said second rod (3). Other choices of the coupling type (9) can include any part model for handlebars or folding bike or scooter that allows this handlebar joint to reduce the space occupied by the vehicle when it is not being used as a means of transportation.

At the top of the third rod (7) are the handlebars (8), which are provided with levers which enable said handlebar (8) to also be capable of articulating with respect to said third rod. The articulation of the handlebar (8) occurs through the inner edges of the levers, through the release of the couplings (10) located in the central part of the handlebar. The referred couplings (10), are also preferably of the clip type, as well as the couplings (9), and can be selected from the options in the market for this purpose on similar vehicles.

Positioned in the upper portion of said base structure (1) is a fairing (11) which centrally houses the axis of the second wheel, sometimes referred to as a rear wheel (12).

This fairing (11) is flanked by closure elements (13) and damping elements (14). It extends upwardly, so that when the transportation device or environmentally friendly vehicle is in use, the fairing (11) is positioned between the legs of the driver who keeps his feet on the floorboard (15), which is provided with an anti-slip film, and a slot located in its central part to permit its fitting and fastening to the upper part of said fairing (11).

The transition between the positions of use and guard of the transportation vehicle or environmentally friendly vehicle starts from the release tabs on the couplings of the handlebar levers and from the articulation of these in relation to the support rod.

More specifically, this promotes the collection of the telescopic upper part of said support rod and releases its engagement with the lower clamp so that it can obtain its articulation in relation to the upper rod of the front wheel fork.

Then, by releasing the latch bolt of the front segment of the base frame, i.e., the "U" frame, the entire upper stem of the fork of the front wheel rotates relative to the "U" frame, and positions itself laterally to it.

It should be noted that, in order for the user to move the transportation device or environmentally friendly vehicle when in its not-in-use position, only a lateral displacement of the entire upper stem of the fork of the front wheel relative to the "U" frame can be made, allowing the support rod of the handlebar and the handlebar itself mounted to allow the execution of the maneuvers necessary to displace the environmentally friendly vehicle in its not-in-use position.

When in use, the user will position his legs laterally to the fairing, thereby achieving more suitable conditions for the handling of the environmentally friendly vehicle, and where positioning of the rear wheel in relation to the front wheel provides shortening of the wheelbase. This aspect helps to make it more compact.

The fairing may be made of polymers, generally fiberglass, carbon fiber, Kevlar® or other lightweight, durable material.

In addition to the aforementioned fairing serving to support the inside of the legs of the user, which gives the necessary stability to the device, it will also act as a fender, and may also be adapted for use as a glove box which can hold small objects, such as a cell phone, wallet, jacket or notebook, and may also incorporate a carrying handle, when not in use, transforming into a kind of suitcase with wheels.

Alternatively, the operation of said transportation device is made by an electric motor.

A second preferred embodiment of the present invention comprises an alternative for making the structure of the transportation device described herein. Therefore, only the characteristics not previously mentioned will be described in detail.

In this embodiment, the base structure described in the previous embodiment does not exist. The transportation device comprises a structure fitted with a tubular device (100) located in its upper part, preferably in a horizontal manner, and may assume angles allowing its functionality to be preserved. This structure extends substantially horizontally along a second substantially vertical tubular device, not shown in the Figures herein. Such structure will be, therefore, referred to as the base structure of the second preferred embodiment.

The said structure is provided with side plates (200) fixed by a suitable means. Said plates, as well as, the base structure and the tubular devices are fabricated with a weight-force resistant material, such as metal. In this case, the attachment is preferably welded. The selected metal is preferably aluminum, thus, those skilled in the art can easily understand that aluminum is not a limitation of the present invention and may be replaced by another material, provided that it preserves the characteristics of the invention.

Alternatively, polymeric materials or carbon fiber materials may also be options for the fabrication of the base structure.

In the lower portion of this structure that we will now also call a fairing, additional structures are arranged on each side (800) which provide support for the feet of the user, i.e., act as a "board/deck." Said additional structures are fixed to the metal plate (200) by means of the usual technical elements, which promote mobility to such structures, so that when in the in-use position, they are parallel to the ground, and when in the guard position, they are perpendicular to the ground.

In the second embodiment of the invention, the support provided by the fairing between the legs of the user also imparts greater stability/balance to the device.

The present embodiment is provided with a rear axle (300), similar to those commonly used in the art, such as in the Magic Wheel model. However said axle is not present in common models of vehicles, such as scooters. Said axle (300) is fixed by means of a movable fairing attachment. More specifically, said axle is fixed to the side plates of the bodywork.

In this embodiment, the handlebar (600) has an additional feature which further distinguishes the invention from the prior art. The handlebar levers (600) may serve to support the transportation device. When in the guard position, the levers, together with the rear tire, form a tripod.

This tripod allows the transportation device of the present invention to remain upright when the handlebar (600) is folded and embedded in the fairing. The handlebar (600) fits to the fairing so as to enable locking of the assembly, so that the chance of accidents due to loose pieces, or even, if said device turns, can be reduced, when either in this position, or the rest position.

The front wheel has a device of the fender type coupled to it (700), which may be substantially in the form of a handle, which allows the displacement of the transportation device when the device is in the upright position. The displacement of said device is accomplished by moving the rear wheel when the handlebar (600) is docked on the fairing.

Such mobility of the parts of the transportation device of the present invention enables it to be portable and compact, allowing it to be stored or transported, for example, to lie within the trunk of a car, occupying the least possible space.

## Claims

1. Transportation device comprising:
- a base structure (1) provided with a first rod at its front end (H);
- at least one movable clamping device (2);
- a second rod (3);
- a fork (4);
- a first wheel (5);
- a third telescoping rod (7);
- a handlebar (8) provided with levers;
- couplers (9) (10);
- a vertically extending fairing (11); and
- a second wheel (12).

2. Device according to claim 1, wherein the first rod (H) is split, having segments that have been joined together by means of movable clamping device (2) and having a second rod (3).

3. Device according to claim 1, wherein the second rod (3) has an opposite end which is in solidarity, inferiorly, to a fork (4) and superiorly to a third rod (7).

4. Device according to claim 1, wherein the fork is coupled to a first wheel (5) having side caps (6).

5. Device according to claim 1, wherein the third rod (7) serving as a means of support for the handlebars (8) and interacting via its lower portion, by releasing the coupling (9) with respect to said second rod (3).

6. Device according to claim 1, wherein the levers provided at the inner ends of the couplings (10) located centrally to the handlebars (8) are released allowing the handlebar articulation (8) with respect to said third rod (7).

7. Device according to claim 1, wherein the fairing (11) provided with a floorboard (15) in the upper part of the base, is positioned in the upper portion of the base frame (1) centrally housing the rear wheel axle (12) and receiving lateral closure and damping elements (13).

8. Device according to claims 1 and 7, wherein when in use the fairing (11) is arranged between the legs of the driver, which keeps his feet on the ground (15).

9. Device according to claim 7, wherein the floorboard is provided with a slip-resistant film, having a slot located in its central part to permit its fitting and fastening to the upper part of the fairing (11).

10. Device according to claim 1, wherein the articulation in relation to the upper rod of the front wheel fork occurs by means of telescopic collection of the upper part of said support rod and release of its engagement from the lower hitch and subsequent release of the clamping device (2) moving the front segment of the base structure (1).

11. Device according to claim 10, wherein the assembly of the upper rod of the front fork wheel rotates relative to the base structure (1) and is positioned laterally thereto.

12. Device according to claim 1, wherein when in the not-in-use position, the movement of the transportation device is effected by lateral movement of the upper handle assembly of the fork of the front wheel with respect to the base structure (1).

13. Device according to claim 12, wherein the handlebar support rod and handlebar itself remain mounted to allow the displacement of the transportation device in its out-of-use position.

14. Device according to claim 1, wherein the rear wheel is positioned in relation to the front wheel to provide shortening of the wheelbase.

15. Device according to claim 1, wherein the fairing also acts as a fender, or alternatively can be adapted for use as a glove box, to incorporate a carrying handle or transform into a kind of suitcase with wheels.

16. Device according to claim 1, wherein it alternately has a motor driven by electric power.

17. Device according to claims 1 and 7, wherein the fairing is generally made of polymers, fiberglass, carbon, Kevlar® or other lightweight, sturdy material fiber.

18. Transportation device comprising:
- a base structure provided with a tubular device (100) located in its upper part which extends along a second substantially vertical tubular device;
- at least one movable clamping device;
- side plates (200) made with a durable strength-weight material;
- a fork (4);
- a first wheel;
- a rod (300);
- at least one rod (7);
- a handlebar (600) provided with levers;
- additional structures (800); and
- a second wheel.

19. Device according to claim 18, wherein said tubular device (100) is preferably in a horizontal manner.

20. Device according to claim 18, wherein the tubular device (100) has angles, so that its functionality is preserved.

21. Device according to claim 18, wherein said base structure is provided with side plates (200) secured by soldering.

22. Device according to claim 21, wherein the material used is metal and preferably aluminum.

23. Device according to claim 18 or 21, wherein the base structure is made of carbon or polymeric fiber material.

24. Device according to claim 18, wherein the additional structures (800) are positioned in the lower portion of the base structure, on each side, serving as a support for the feet of the user, and are fixed to the metal plates (200) in a movable manner.

25. Device according to claim 24, wherein when in the in-use position, additional structures (800) are parallel to the ground, and when in the guard position are vertical to the ground.

26. Device according to claim 18, wherein it is provided with a rear axle (300) fixed by the attachment of movable side plates.

27. Device according to claim 18, wherein the handlebar levers (600) together with the rear tire, when in the guard position, form a tripod, and serve as a support for the transportation device.

28. Device according to claim 27, wherein the tripod enables the transportation device to remain upright when the handlebars (600) are folded and embedded in the fairing.

29. Device according to claims 27 or 28, wherein the handlebars (600) fit the structure so as to enable locking of the assembly.

30. Device according to claim 18, wherein the front wheel has coupled to it a device of the fender type (700) which allows the displacement of the transportation device when the device is upright.

31. Device according to claim 30, wherein the fender is substantially in the form of a handle.

32. Device according to claim 18, wherein the displacement is performed by moving the rear wheel when the handlebar (600) is embedded in the structure.

33. Device according to claim 18, wherein the mobility of the parts allow it to be portable and compact for storage or transport.

34. Device according to claim 1 or 18, wherein the stability occurs due to the support provided by the fairing between the legs of the user.
